# EUROPEAN PATENT SPECIFICATION

(11) **EP 3 878 109 B1**
(45) Date of publication and mention of the grant of the patent: **03.09.2025**
(21) Application number: 19798253.1
(22) Date of filing: 03.11.2019
(51) Int. Cl.: H04B 7/26

(54) **TRANSMISSION SYSTEM FOR MONITORING EQUIPMENT IN RAT TRAPS POSITIONED IN SEWERS, SHAFTS, AND WELLS**
ÜBERTRAGUNGSSYSTEM ZUR ÜBERWACHUNG VON AUSRÜSTUNG IN RATTENFALLEN, DIE IN KANÄLEN, SCHÄCHTEN UND BRUNNEN ANGEORDNET SIND
SYSTÈME DE TRANSMISSION POUR SURVEILLER UN ÉQUIPEMENT DANS DES PIÈGES À RAT POSITIONNÉS DANS DES ÉGOUTS, DES GAINES ET DES PUITS

(30) Priority: 08.11.2018 DK BA201800085 U
(43) Date of publication of application: 15.09.2021
(73) Proprietor: Ratél APS, 6000 Kolding (DK)
(72) Inventor: KNUDSEN, Hans, Brun, 6000 Kolding (DK)
(74) Representative: Larsen & Birkeholm A/S
(86) International application number: PCT/EP2019/080009
(87) International publication number: WO 2020/094530

(56) References cited:
- WO-A1-2018/099707
- US-A1- 2006 003 696
- US-A1- 2008 106 434
- US-A1- 2009 201 123
- US-A1- 2014 126 460

## Description

### Technical field of the invention

The present invention relates to monitoring equipment in rat traps for positioning in sewers, shafts, and wells.

### Background of the invention

Today, monitoring means, such as sensors, are positioned in rat traps for use in sewers and shafts to measure many different conditions. Signals produced by a control unit with an antenna placed at the top of the manhole, below the manhole cover are used to send information to a GSM network to be able to transfer data from rat traps to a digital platform. The problems with such installations are difficulties getting data transferred from the manhole to the GSM network due to absorption of the signal passing through concrete walls or iron covers. To overcome that problem, another system (DK 2016 00138 U4, WO2018099707) has been introduced with a transmitter in the trap configured for wireless transmission to a repeater at the top of the manhole. The repeater transfers data wirelessly to a receiver unit, which has a good connection to the GSM network. Although, an improved solution, new problems have been encountered. Positioning the receiver where the signals from the repeater can be detected poses a problem as on-site tests are needed to secure that the wireless communication is optimal. Furthermore, it is sometimes difficult to find a suitable position where to mount the receiving unit, and there is a risk that the receiving unit will be removed, stolen, or subject to vandalism as the position is often in public areas.

It is therefore desirable to provide a transmission system that avoids or at least alleviates the above-mentioned problems.

### Summary of the invention

The invention is defined in the independent claims. Advantageous embodiments are set out in the dependent claims.

One advantage of the wireless transmission system according to the present invention is low power consumption and long signal range. Another advantage is that the system is entirely positioned within the shaft or well, thereby avoiding vandalism.

The term "short-range wireless transmission protocol" is used herein to refer to technologies that permit electronic devices to communicate with other electronic devices that are nearby, usually within 5-200 meters. The advantage of using a short-range wireless transmission protocol to send the monitoring data to the wireless relay is that the power consumption is minimal. As the wireless relay is normally positioned about 3-6 meters above the rat trap, there is no need for long-range protocols. Examples of such technologies are IEEE 802.11, IEEE 802.15.4, Bluetooth, and Zigbee. The IEEE 802.15.4 standard defines the basic physical layer (PHY), including frequency range, modulation, data rates, and frame format, and the media access control (MAC) layer. Individual protocols are designed to use the basic PHY and MAC, such as ISA100, Wireless HART, ZigBee, MiWi, SNAP, and 6LoPAN.

The IEEE 802.15.4 standard defines three basic frequency ranges. The most widely used is the worldwide 2.4-GHz ISM band (16 channels). The basic data rate is 250 kbits/s. Another range is the 902-928 MHz ISM band in the U.S. (10 channels). The data rate is 40 kbits/s or 250 kbits/s. Furthermore, there is the European 868-MHz band (one channel) with a data rate of 20 kbits/s.

All three ranges use direct sequence spread spectrum (DSSS) with either binary phase-shift keying (BPSK) or offset quadrature phase-shift keying (QPSK) modulation. The multiple access mode is carrier sense multiple access with collision avoidance (CSMA-CA). The minimum defined power levels are -3 dBm (0.5 mW). The most common power level is 0 dBm. Typical range is less than 10 meters. Preferably, the short-range wireless transmission protocol for use in the present invention is utilizing the 868 MHz ISM band or the 902-928 MHz ISM band (915 MHz).

In one or more embodiments, the short-range wireless transmission is performed in the industrial, scientific and medical (ISM) radio bands, preferably in the 902-928 MHz, 868.0-870.0 MHz, and/or 433.05-434.79 MHz frequency bands.

In one or more embodiments, the transmit time slot of the short-range wireless transmission is within the range of 0.1 to 10 milliseconds, such as within the range of 0.5-9 milliseconds, e.g. within the range of 1-8 milliseconds, such as within the range of 2-7 milliseconds, e.g. within the range of 3-6 milliseconds. The reason for transmitting the data packet that fast is to reduce energy consumption. Thereby, the battery life of the transmitter unit can be increased to e.g. 3-7 years, reducing the need for service.

In one or more embodiments, the short-range wireless transmission is performed with a data rate of 1-400 kilobit per second, e.g. within the range of 5-375 kilobit per second, such as within the range of 10-350 kilobit per second, e.g. within the range of 100-300 kilobit per second, such as within the range of 150-250 kilobit per second, e.g. within the range of 175-200 kilobit per second. As above, when combined with short time slots, the energy consumption of the transmitter unit is markedly reduced. The data rate may be higher than 400 kilobit per second, but the choice of data rate must be balanced with the battery life expectation. In one or more embodiments, the short-range wireless transmission is performed with a data rate of at least 20 kilobit per second, such as at least 50 kilobit per second, e.g. at least 100 kilobit per second, such as at least 150 kilobit per second, e.g. at least 200 kilobit per second, such as at least 250 kilobit per second, e.g. at least 300 kilobit per second, such as at least 350 kilobit per second, e.g. at least 400 kilobit per second.

In one or more embodiments, the short-range wireless transmission is performed at least once a month, such as at least once a week, preferably at least once a day, such as at least once per hour, even more preferably at least once per 10 minutes, such as at least once per minute, preferably once per 1-10 seconds, e.g. once per 5 seconds. The advantage of transmitting relatively often, such as per minute or second, is for statistical reasons (e.g. for big data analysis), and for the situation where the trap is flooded to such an extent that the signal is lost in water. In this situation, the wireless relay may be configured to send an alarm if the expected signal from the communication unit has been absent for a preset period of time.

The monitoring data may include the accumulated number of times that the trap has been activated within a preset time period, the remaining life time of the monitoring means' or communication unit's battery, the trap identification number, the traps gps position, a time and/or date stamp, tilt of the trap, or other important data. These data typically take up 5-250 bytes. In one or more embodiments, the payload of each transmittance is within the range of 5-250 bytes, e.g. within the range of 10-250 bytes, such as within the range of 15-225 bytes, e.g. within the range of 20-200 bytes, such as within the range of 25-175 bytes, e.g. within the range of 30-150 bytes, such as within the range of 35-140 bytes, e.g. within the range of 40-130 bytes, such as within the range of 45-120 bytes, e.g. within the range of 50-110 bytes, such as within the range of 55-100 bytes, e.g. within the range of 60-90 bytes, such as within the range of 65-85 bytes, e.g. within the range of 70-90 bytes. Preferably, the payload of each transmittance is at most 200 bytes.

The term "long-range wireless transmission protocol" is used herein to refer to technologies that permit electronic devices to communicate with other electronic devices that are far from one another, usually further than 1000 meters from one another. Examples of such technologies are Sigfox, LoRa, and NB-loT.

The advantage of retransmitting the received monitoring data using a long-range wireless transmission protocol is the high penetration rate and the long range. The high penetration rate is necessary as the signal must be able to pass from the upper part of a well through the ground and/or well cover to an antenna in the network. The network is preferably a Low Power Wide Area Network (LPWAN).

LPWAN is a type of wireless telecommunication wide area network designed to allow long range communications at a low bit rate. The LPWAN data rate according to the present invention preferably ranges from 50 bit per second to 1000 bit per second per channel, such as within 100-600 bit per second per channel.

In the present context, the term "wireless relay" refers to a system that receives, decodes, data regenerates, encodes, and re-transmits a wireless signal.

The terms "monitoring means" or "monitoring equipment" should be understood very broadly in this context. However, some monitoring means or monitoring equipment are given preference, such as sensors, and flowmeters, e.g. a rat kill monitoring means e.g. embodied as a shock sensor, or a motion sensor.

In one or more embodiments, the long-range wireless transmission protocol is selected from the group consisting of LTE Cat M1 (eMTC), LTE Cat NB1 (NB-loT), LoRa, and Sigfox.

In one or more embodiments, the transmission system comprises positioning means adapted for positioning and/or attaching the wireless relay 5-100 cm below the well or shaft cover, such as within the range of 10-95 cm, e.g. within the range of 15-90 cm, such as within the range of 20-85 cm, e.g. within the range of 25-80 cm, such as within the range of 30-75 cm, e.g. within the range of 35-70 cm, such as within the range of 40-65 cm, e.g. within the range of 45-60 cm. This position is important to avoid shielding from the well or shaft cover that is often made of metal. Furthermore, the surrounding soil layer around the well or shaft must not be too thick in order for the emitted signal to pass through. This is why the transmission system cannot work without the wireless relay, as the emitted signal from the transmitter unit, positioned in close relation to the monitoring equipment within the sewer or on the bottom of the well or shaft, cannot penetrate the surrounding soil layer around the well or shaft; and the well or shaft cover will block the remaining signal.

In one or more embodiments, the positioning means comprises an extendable rod with means provided for locking said extendable rod in a determined length; wherein the extendable rod further comprises means arranged in both ends of for engaging the side wall of a well.

In one or more embodiments, the transmitter unit is configured for transmitting with a wavelength and frequency that cannot penetrate the water when the transmitter is positioned under water, such as under 10-100 cm of water.

In one or more embodiments, the transmitter unit is configured for transmitting with a wavelength and frequency that is at least partly absorbed in water or in water comprising conducting contaminants, such as salts, and wherein the wireless relay is configured for measuring the time period between received monitoring data signals. The time period will give an indirect indication on whether the well or shaft is flooded. When flooded, the signal is unable to pass through the water or the contaminated water, as it is poorly conducting, and furthermore may reflect the signal.

In one or more embodiments, wherein when the time period between received monitoring data signals exceeds a predetermined threshold, the wireless relay is configured for logging an alarm and/or creating and transmitting an alarm signal. This is important, as a time period exceeding e.g. 20 minutes is an indication of a blockage of the sewer, which will cause sewage water to rise and escape the sewage system through any possible opening, such as into e.g. a basement of a household.

The monitoring equipment is embedded in a rat trap. Such equipment may monitor the release of the trap, or the presence of a rat in or near the trap. If the killing means in the trap is released by use of pressurized gas, such as carbon dioxide, the monitoring equipment may be a shock sensor, such as a G-sensor. The transmitter unit is embedded in a rat trap. This configuration will avoid external cabling.

In embodiments of the claimed invention, the monitoring data comprises information about the activity of the killing means of a rat trap.

In one or more embodiments, the monitoring data comprises information about the presence of rats within the sewer, well or shaft.

In one or more embodiments, the wireless relay and/or the transmitter unit are configured to emit an ON/OFF synchronizing signal. Synchronization of the different units reduces the energy consumption, and the battery within the different units will last longer. This is important, as the service frequency of the individual units is thereby also reduced.

In one or more embodiments, the wireless relay is configured to ON/OFF synchronize with the transmitter unit.

In one or more embodiments, the transmitter unit is configured to ON/OFF synchronize with the wireless relay.

In one or more embodiments, the wireless relay is configured for measuring the time period between received monitoring data signals and/or packets.

In one or more embodiments, wherein when the time period between received monitoring data signals exceeds a predetermined threshold, the central processing unit comprises program instructions to log an alarm and/or creating and transmitting an alarm signal.

In one or more embodiments, the wireless relay is configured for transmitting a keep-alive message, and then optionally wait for the response. The keep-alive message is to be received by a central control unit. If the wireless relay receives a response to the keep-alive request from the central control unit within a predefined time limit, the wireless relay can assume that the central control unit is working properly and may continue to forward requests to it. If the wireless relay does not receive a response to the keep-alive request message within the predefined time, it assumes that the central control unit is not operational and begins sending all subsequent requests to a standby central control unit. Keep-alive messages may also serve the purpose of checking other health parameters of the central control unit. In general, a keep-alive signal/message is often sent at predefined intervals, and the timing of same plays an important role in checking the connection between two network entities. After a signal is sent, if no reply is received from the other end, it can be assumed that the connection is down or that the central control unit has experienced a failure, and subsequent requests or data should be routed via another path or to an alternate resource (e.g., the standby central control unit). An alternative use of the keep-alive signal is if the wireless relay receives monitoring data that are the same as the last time. In order to save energy, the wireless relay will then simply send a keep-alive signal.

The wireless relay may also be configured to transmit immediately, rather than within preset time frames, if predefined actions occurs, such as a registered kill, or no contact with the communication unit.

It should be noted that embodiments and features described in the context of one of the aspects of the present invention also apply to the other aspects of the invention.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

### Brief description of the figures

Figure 1 shows a transmission system in accordance with various embodiments of the invention;
Figure 2 shows the positioning means in accordance with various embodiments of the invention;
Figure 3 shows a first part of transmission system in accordance with various embodiments of the invention; and
Figure 4 shows a second part of a transmission system in accordance with various embodiments of the invention.

### Detailed description of the invention

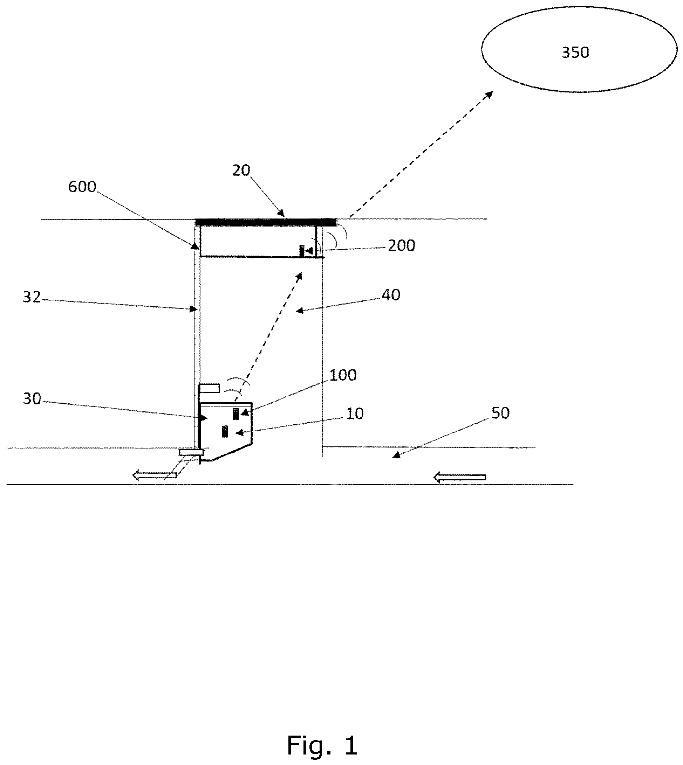

Referring to Figure 1, the general scheme of the invention is shown. Figure 1 shows a transmission system for monitoring equipment 10 embedded in a rat trap 30. The transmission system comprises a transmitter unit 100, a wireless relay 200, and positioning means 600. The transmitter unit 100 is configured for receiving monitoring data from a monitoring equipment 10 embedded in a rat trap 30, and for transmitting the received monitoring data. The wireless relay 200 is configured for receiving the monitoring data from the monitoring equipment 10. The positioning means 600 is adapted for positioning the wireless relay 200 at a position below the well cover 20, preferably 5-100 cm below the well cover 20. The wireless relay 200 is also configured for transmitting the received monitoring data to a server 350 at a network location.

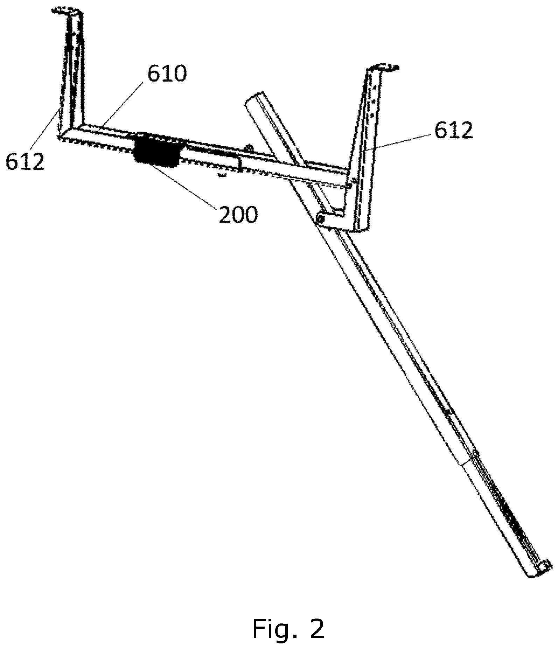

Figure 2 shows the positioning means 600 in accordance with various embodiments of the invention. The positioning means 600 comprises an extendable rod 610 with means provided for locking said extendable rod 610 in a determined length. Furthermore, means 612 are arranged in both ends of the extendable rod 610 for engaging the side wall of a well. The positioning means 600 are also adapted as anchoring means for anchoring the rat trap 30 with a wire 32 (Figure 1).

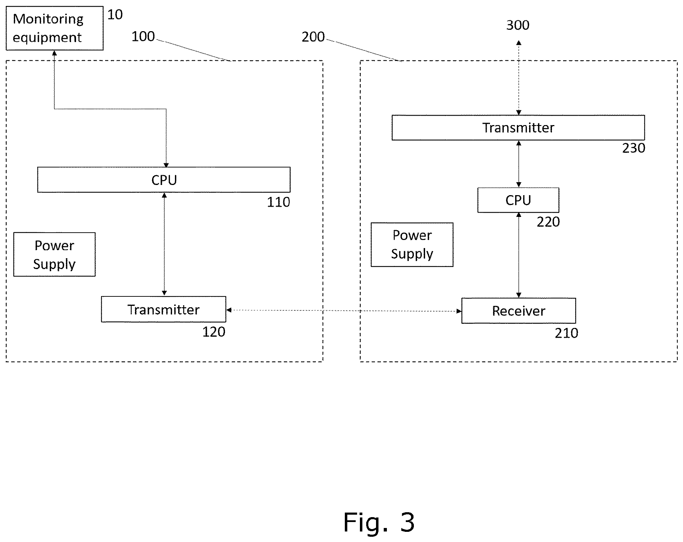

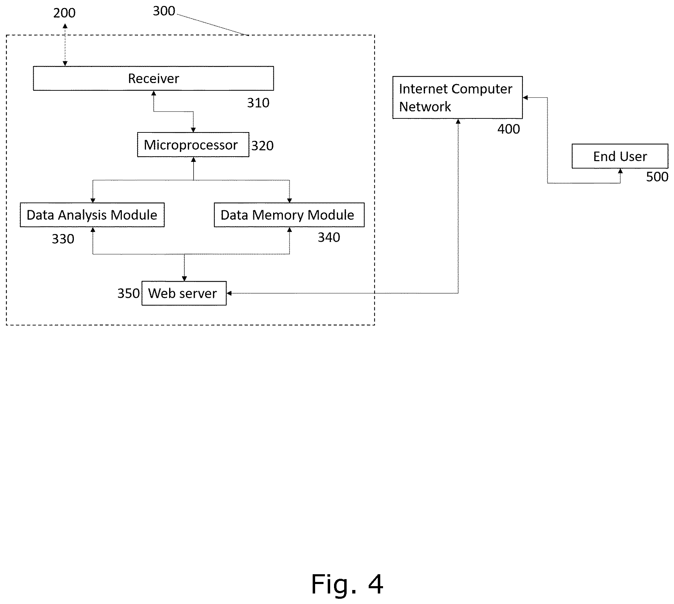

A transmission system according to the present invention is exemplified in Figures 3 and 4. Figure 3 shows a transmitter unit 100 in accordance with various embodiments of the present invention being in electrical contact with a monitoring equipment 10. Once the CPU 110 receives the monitoring data packet from the monitoring equipment 10, it automatically formats it into a data packet, which is then transmitted using a short-range wireless transmission protocol over an airlink to the wireless relay 200 via a transmitter 120 and a receiver 210. When the CPU 220 of the wireless relay 200 receives the monitoring data packet, it automatically decodes, data regenerates, encodes, and formats the data packet it into a new data packet, perhaps with further information regarding the status of the wireless relay 200 and its hardware. Other data processing may also be performed. Once properly formatted, the data packet is transmitted using a long-range wireless transmission protocol through an airlink to a central unit 300 via a transmitter 230 and a receiver 310, as shown in Figures 3 and 4. A microprocessor 320 in the base station 300 receives the data packet. The microprocessor controls a data-analysis module 330 (e.g., hardware and software for statistical analysis) that process the data packet, and a data-memory module 340 (e.g., a computer memory or database) that stores it. A web server 350 receives the processed data from the data-analysis 330 and data-memory modules 340 and makes it available to an Internet computer network 400 through a first network connection. An end-user 500 may access the data on the web server 350 through a second network connection using the Internet computer network 400.

### References

- 10: Monitoring equipment
- 20: Well cover
- 30: Rat trap
- 32: Wire
- 40: Well
- 50: Sewer
- 100: Transmitter unit
- 110: CPU
- 120: Transmitter
- 200: Wireless relay
- 210: Receiver
- 220: CPU
- 230: Transmitter
- 300: Central unit
- 310: Receiver
- 320: Microprocessor
- 330: Data-analysis module
- 340: Data-memory module
- 350: Web server
- 400: Internet computer network
- 500: End-user
- 600: Positioning means
- 610: Extendable rod
- 612: Means for engaging the side wall of a well or shaft

## Claims

1. A rat trap system for use in sewers, shafts, and wells, the rat trap system comprising:
- a rat trap (30) comprising killing means:
- a monitoring equipment (10) embedded within said rat trap (30), and configured for monitoring the activation of the killing means; and
- a battery powered transmitter unit (100) embedded within said rat trap (30), and configured for receiving monitoring data from said monitoring equipment (10), and for transmitting said received monitoring data;
- a wireless relay (200) configured for receiving the monitoring data from said monitoring equipment (10) via said transmitter unit (100); and
- positioning means (600) adapted for positioning and/or attaching the wireless relay (200) 5-100 cm below the well or shaft cover (20); **characterized in that** the wireless relay (200) is configured for transmitting said received monitoring data directly to a server (350) at a network location without the use of an intermediate receiver unit; wherein the transmitter unit (100) is configured for transmitting said received monitoring data using a short-range wireless transmission protocol, and wherein the short-range wireless transmission of the monitoring data is performed in periods of 0.1 to 10 milliseconds, with a data rate of at least 1 kilobit per second; wherein the wireless relay (200) is configured to receive the monitoring data from said transmitter unit (100) and to retransmit the received monitoring data using a long-range wireless transmission protocol.

2. The rat trap system according to claim 1, wherein the long-range wireless transmission protocol is selected from the group consisting of LTE Cat M1 (eMTC), LTE Cat NB1 (NB-IoT), LoRa, and Sigfox.

3. The rat trap system according to any one of the claims 1-2, wherein the short-range wireless transmission protocol is selected from the group consisting of IEEE 802.11, IEEE 802.15.4, Bluetooth, Zigbee, WirelessHART, MiWi, 6LoPAN, and SNAP.

4. The rat trap system according to any one of the claims 1-3, wherein the short-range wireless transmission is performed in the 902-928 MHz, 868.0-870.0 MHz, and/or 433.05-434.79 MHz frequency bands.

5. The rat trap system according to any one of the claims 1-4, wherein the wireless relay (200) is configured for measuring the time period between received monitoring data signals.

6. The rat trap system according to claim 5; wherein when the time period between received monitoring data signals exceeds a predetermined threshold, the wireless relay (200) is configured for logging an alarm and/or creating and transmitting an alarm signal.

7. The rat trap system according to any one of the claims 1-6, wherein the monitoring equipment (10) is a rat kill monitoring means, such a shock sensor, or a motion sensor.

8. The rat trap system according to any one of the claims 1-7, wherein the killing means is released by use of pressurized gas, such as carbon dioxide.

## Patentansprüche

1. Rattenfallensystem zur Verwendung in Kanalisationen, Schächten und Brunnen, wobei das Rattenfallensystem umfasst:
Rattenfalle (30) umfassend Tötungsmittel;
eine Überwachungsausrüstung (10) eingebettet innerhalb der Rattenfalle (30) und konfiguriert zum Überwachen der Aktivierung der Tötungsmittel; und
eine batteriebetriebene Sendeeinheit (100) eingebettet innerhalb der Rattenfalle (30) und konfiguriert zum Empfangen von Überwachungsdaten von der Überwachungsausrüstung (10) und zum Senden der empfangenen Überwachungsdaten;
drahtloses Relais (200) konfiguriert zum Empfangen der Überwachungsdaten von der Überwachungsausrüstung (10) über die Sendeeinheit (100); und
Positionierungsmittel (600) ausgelegt zum Positionieren und/oder Befestigen des drahtlosen Relais (200) 5-100 cm unterhalb der Schacht- oder Brunnendeckel (20); **dadurch gekennzeichnet, dass** das drahtlose Relais (200) konfiguriert ist, die empfangenen Überwachungsdaten direkt an einen Server (350) an einem Netzwerkstandort ohne Verwendung einer Zwischenempfängereinheit zu senden; wobei die Sendeeinheit (100) konfiguriert ist, die empfangenen Überwachungsdaten unter Verwendung eines drahtlosen Kurzstrecken-Übertragungsprotokolls zu senden, und wobei die drahtlose Kurzstrecken-Übertragung der Überwachungsdaten in Perioden von 0,1-10 Millisekunden mit einer Datenrate von wenigstens 1 Kilobit pro Sekunde durchgeführt wird; wobei das drahtlose Relais (200) konfiguriert ist, die Überwachungsdaten von der Sendeeinheit (100) zu empfangen und die empfangenen Überwachungsdaten unter Verwendung eines drahtlosen Langstrecken-Übertragungsprotokolls erneut zu senden.

2. Rattenfallensystem nach Anspruch 1, wobei das drahtlose Langstrecken-Übertragungsprotokoll aus der Gruppe bestehend aus LTE Cat M1 (eMTC), LTE Cat NB1 (NB-IoT), LoRa und Sigfox ausgewählt ist.

3. Rattenfallensystem nach einem der Ansprüche 1-2, wobei das drahtlose Kurzstrecken-Übertragungsprotokoll aus der Gruppe bestehend aus IEEE 802.11, IEEE 802.15.4, Bluetooth, Zigbee, WirelessHART, MiWi, 6LoPAN und SNAP ausgewählt ist.

4. Rattenfallensystem nach einem der Ansprüche 1-3, wobei die drahtlose Kurzstrecken-Übertragung in den Frequenzbändern 902-928 MHz, 868,0-870,0 MHz und/oder 433,05-434,79 MHz durchgeführt wird.

5. Rattenfallensystem nach einem der Ansprüche 1-4, wobei das drahtlose Relais (200) konfiguriert ist zum Messen der Zeitperiode zwischen empfangenen Überwachungsdatensignalen.

6. Rattenfallensystem nach Anspruch 5; wobei, wenn die Zeitperiode zwischen empfangenen Überwachungsdatensignalen einen vorbestimmten Schwellenwert überschreitet, das drahtlose Relais (200) konfiguriert ist zum Protokollieren eines Alarms und/oder Erzeugen und Senden eines Alarmsignals.

7. Rattenfallensystem nach einem der Ansprüche 1-6, wobei die Überwachungsausrüstung (10) ein Überwachungsmittel zur Rattenbekämpfung ist, wie z. B. ein Schocksensor oder ein Bewegungssensor.

8. Rattenfallensystem nach einem der Ansprüche 1-7, wobei das Tötungsmittel durch Verwendung von Druckgas, wie Kohlendioxid, freigesetzt wird.

## Revendications

1. Système de piège à rat destiné à être utilisé dans des égouts, des gaines et des puits, le système de piège à rat comprenant :
- un piège à rat (30) comprenant un moyen de mise à mort ;
- un équipement de surveillance (10) intégré au sein dudit piège à rat (30), et configuré pour surveiller l'activation du moyen de mise à mort ; et
- une unité d'émission alimentée par batterie (100) intégrée au sein dudit piège à rat (30), et configurée pour recevoir des données de surveillance dudit équipement de surveillance (10), et pour transmettre lesdites données de surveillance reçues ;
- un relais sans fil (200) configuré pour recevoir les données de surveillance dudit équipement de surveillance (10) via ladite unité d'émission (100) ; et
- un moyen de positionnement (600) adapté pour positionner et/ou fixer le relais sans fil (200) 5 à 100 cm sous le couvercle du puits ou de la gaine (20) ; **caractérisé en ce que** le relais sans fil (200) est configuré pour transmettre lesdites données de surveillance reçues directement à un serveur (350) au niveau d'un emplacement réseau sans utiliser d'unité de réception intermédiaire ; dans lequel l'unité d'émission (100) est configurée pour transmettre lesdites données de surveillance reçues à l'aide d'un protocole de transmission sans fil à courte portée, et dans lequel la transmission sans fil à courte portée des données de surveillance est réalisée par périodes de 0,1 à 10 millisecondes, avec un débit de données d'au moins 1 kilobit par seconde ; dans lequel le relais sans fil (200) est configuré pour recevoir les données de surveillance de ladite unité d'émission (100) et pour retransmettre les données de surveillance reçues à l'aide d'un protocole de transmission sans fil à longue portée.

2. Système de piège à rat selon la revendication 1, dans lequel le protocole de transmission sans fil à longue portée est sélectionné dans le groupe constitué de LTE Cat M1 (eMTC), LTE Cat NB1 (NB-loT), LoRa, et Sigfox.

3. Système de piège à rat selon l'une quelconque des revendications 1 et 2, dans lequel le protocole de transmission sans fil à courte portée est sélectionné dans le groupe constitué de IEEE 802.11, IEEE 802.15.4, Bluetooth, Zigbee, WirelessHART, MiWi, 6LoPAN, et SNAP.

4. Système de piège à rat selon l'une quelconque des revendications 1 à 3, dans lequel la transmission sans fil à courte portée est réalisée dans les bandes de fréquences 902 à 928 MHz, 868,0 à 870,0 MHz et/ou 433,05 à 434,79 MHz.

5. Système de piège à rat selon l'une quelconque des revendications 1 à 4, dans lequel le relais sans fil (200) est configuré pour mesurer la période de temps entre des signaux de données de surveillance reçus.

6. Système de piège à rat selon la revendication 5 ; dans lequel lorsque la période de temps entre des signaux de données de surveillance reçus dépasse un seuil prédéterminé, le relais sans fil (200) est configuré pour enregistrer une alarme et/ou créer et transmettre un signal d'alarme.

7. Système de piège à rat selon l'une quelconque des revendications 1 à 6, dans lequel l'équipement de surveillance (10) est un moyen de surveillance de mise à mort de rat, tel qu'un capteur de choc, ou un capteur de mouvement.

8. Système de piège à rat selon l'une quelconque des revendications 1 à 7, dans lequel le moyen de mise à mort est libéré par l'utilisation d'un gaz sous pression, tel que le dioxyde de carbone.
